# EUROPÄISCHE PATENTSCHRIFT

(11) **EP 1 645 257 B1**
(45) Veröffentlichungstag und Bekanntmachung des Hinweises auf die Patenterteilung: **20.05.2009**
(21) Anmeldenummer: 04024009.5
(22) Anmeldetag: 08.10.2004
(51) Int. Cl.: A61G 7/00

(54) **Bett, insbesondere ein Kranken- oder Pflegebett**
Bed, specially a medical or care bed
Lit, notamment lit de malades ou lit de soins

(43) Veröffentlichungstag der Anmeldung: 12.04.2006
(73) Patentinhaber: Wissner-Bosserhoff GmbH, D-58739 Wickede (DE)
(72) Erfinder: Bernal, Carlos, 59494 Soest (DE)
(74) Vertreter: Graefe, Jörg

(56) Entgegenhaltungen:
- GB-A- 270 067
- US-A- 3 055 042
- US-A- 3 204 258
- US-B1- 6 363 556

## Beschreibung

Die Erfindung betrifft ein Bett, insbesondere ein Kranken- oder Pflegebett, mit Rollen und zumindest einer Bremse, wobei das Bett im ersten Zustand ungebremst verfahrbar und in einem zweiten Zustand gebremst ist und wobei die Bremse zumindest einen Betätigungshebel aufweist.

Derlei Betten sind aus dem Stand der Technik bekannt. Als Bremsen werden zumeist Kombinationen aus Hebeln und Bremsklötzen benutzt, die unmittelbar auf die Rollen des Bettes einwirken und im gebremsten Zustand die Rollen blockieren. Dazu muss der Betätigungshebel der Bremse zumeist nach unten gedrückt werden. Der Betätigungshebel ist dabei zumeist im unmittelbaren Bereich der Rolle angebracht, so dass der Betätigungshebel mit einem Fuß betätigt werden kann. Zum Lösen der Bremse muss dann mittels des Fuß der Betätigungshebel nach oben gedrückt werden. Dieses kann, insbesondere wenn der Bediener leichtes Schuhwerk trägt, zu Verletzungen an den Füßen des Bedieners kommen.

Aus dem Stand der Technik sind ferner Pflegebetten bekannt, bei denen zum Bremsen des Bettes das Bett angehoben wird, so dass die Rollen keinen Kontakt mehr mit der Aufstandsfläche haben und das Bett auf Standfüßen ruht. Das Anheben der Rollen ist bei derartigen Betten zumeist mit einem Anheben der Liegefläche verbunden. D. h., dass das Bett insgesamt angehoben werden muss, was für das Bedienungspersonal oftmals erhebliche Kraftanstrengungen bedeutet, sofern hierzu nicht motorische Hilfe in Anspruch genommen wird. Wenn motorische Hilfe vorgesehen ist, ist ein Lösen beziehungsweise ein Feststellen der Bremsen ohne Stromversorgung nicht möglich. Auch dieses hat sich für den Einsatz insbesondere in Krankenhäusern als nicht geeignet erwiesen.

US 3 055 042 offenbart ein Bett mit aller technischen Merkmalen des Oberbegriffs des Anspruchs 1.

Der Erfindung liegt vor dem Hintergrund der Nachteile des Standes der Technik die Aufgabe zugrunde, ein Pflegebett mit einer Bremse vorzuschlagen, die einfach bedienbar, ohne motorische Hilfe feststellbar beziehungsweise lösbar und ohne besonderen Kraftaufwand auch von schwächeren Bedienungspersonen betätigbar ist.

Diese Aufgabe wird erfindungsgemäße durch ein Bett nach Anspruch 1, gelöst. Nähere Ausgestaltungen der erfindungsgemäßen Betten ergeben sich aus den davon abhängigen Unteransprüchen.

Ein Bett der eingangs genannten Art ist erfindungsgemäß so weitergebildet, dass der Betätigungshebel zum Feststellen der Bremse, d. h. beim Wechsel vom ersten Zustand in den zweiten Zustand, und zum Lösen der Bremse, d. h. beim Wechsel vom ersten Zustand in den zweiten Zustand, in die gleiche Richtung verschwenkbar ist. Der Betätigungshebel eines erfindungsgemäßen Betts kann also so angeordnet werden, dass er sowohl zum Feststellen der Bremse als auch zum Lösen der Bremse wie ein Fußpedal von oben mit dem Fuß heruntergedrückt werden kann. Eine Bedienungsperson kann also den Fußhebel mit der Unterseite des Fußes bedienen, die schmerzunempfindlicher ist und in der Regel durch eine Sohle eines Schuhs oder eines Sandalen geschützt ist.

Der Betätigungshebel eines erfindungsgemäßen Bettes kann im ersten Zustand des Bettes eine erste Stellung und im zweiten Zustand des Bettes eine zweite Stellung haben, wobei der Betätigungshebel zum Wechsel vom zweiten Zustand in den ersten Zustand zumindest vorübergehend in eine dritte Stellung verschwenkbar ist. Die zweite Stellung des Betätigungshebels kann dabei zwischen der ersten Stellung und der dritten Stellung sein. Bei einem so ausgestalteten erfindungsgemäßen Bett kann der Betätigungshebel der Bremse zum Lösen der Bremse aus der zweiten Stellung des Betätigungshebels kurzzeitig in die dritte Stellung des Betätigungshebels verschwenkt werden. Aus der dritten Stellung schwenkt dann der Betätigungshebel vorzugsweise selbsttätig, insbesondere aufgrund einer Federkraft, zurück in die erste Stellung, in welcher die Bremse gelöst ist.

Ein Bett der eingangs genannten Art oder ein erfindungsgemäßes Bett der vorgenannten Art ist so weitergebildet, dass die Bremse zumindest ein Andruckelement und zumindest ein Federelement aufweist, wobei im zweiten Zustand des Bettes, d. h. zum Bremsen des Bettes das Federelement gespannt ist und das Andruckelement gegen eine Aufstandsfläche drückt, auf der das Bett mit seinen Rollen ruht. Bei dieser erfindungsgemäßen Bremse wird nicht unmittelbar auf die Rollen eingewirkt, d. h. die Rollen des Bettes werden durch die Bremse nicht blockiert. Ebensowenig wird die Lage der Rollen relativ zum Bett beziehungsweise zur Aufstandsfläche verändert. D. h. insbesondere, dass das Bett nicht angehoben und auf Standfüße gesetzt wird. Vielmehr wirkt die erfindungsgemäße Bremse so, dass sie die Andruckelemente gegen den Boden drückt und zwar mit einer solchen Kraft, die ausreichend ist, ein freies Rollen des Bettes zu verhindern und andererseits kein Anheben des Bettes beziehungsweise eines Matratzenrahmens des Bettes bewirkt. Auch bleiben die Rollen in permanentem Kontakt mit der Aufstandsfläche des Bettes.

Das Federelement der Bremse kann im ersten Zustand des Bettes, d. h. im ungebremsten Zustand des Bettes, weitgehend entspannt sein und das Andruckelement von der Aufstandsfläche abgehoben halten. Ein Kontakt zwischen dem Andruckelement und der Aufstandsfläche ist dadurch verhindert, wodurch ein freies und ungebremstes Rollen des Bettes möglich ist.

Die Bremse eines erfindungsgemäßen Bettes umfaßt ein Verschiebeelement, wobei an diesem Verschiebeelement das Andruckelement verschiebbar gelagert ist. Das Federelement kann bei einer Bremse mit einem Verschiebeelement zwischen dem Verschiebeelement und dem Andruckelement angeordnet sein.

Das Verschiebeelement kann unmittelbar verschiebbar an dem Untergestell oder mittelbar an dem Untergestell des Bettes angebracht sein. Dabei ist es insbesondere möglich, dass das Verschiebeelement unter Zwischenschaltung eines Halteelements an dem Untergestell angebracht ist.

Das Verschiebeelement einer Bremse eines erfindungsgemäßen Bettes ist über Hebel mit dem Betätigungshebel zur Übertragung von auf den Betätigungshebel wirkenden Kräften gekoppelt. Die Kopplung zwischen dem Betätigungshebel und dem Verschiebeelement ist dabei so gestaltet, dass das Verschiebeelement entsprechend der Stellungen des Betätigungshebels in eine erste Stellung, eine zweite Stellung und eine dritte Stellung bringbar ist. In der ersten Stellung des Verschiebeelements ist das Bett dann im ersten, d. h. ungebremsten Zustand, in der zweiten Stellung des Verschiebeelements ist das Bett im zweiten Zustand, d. h. im gebremsten Zustand, während die dritte Stellung des Verschiebeelements zum Lösen der Bremse, d. h. beim Wechsel vom zweiten Zustand in den ersten Zustand eingenommen wird.

Die Bremse eines erfindungsgemäßen Bettes umfaßt eine Sperrklinke , die vorzugsweise federbelastet ist. Diese Sperrklinke verriegelt das Verschiebeelement und damit auch den Betätigungshebel in der ersten Stellung beziehungsweise in der zweiten Stellung .

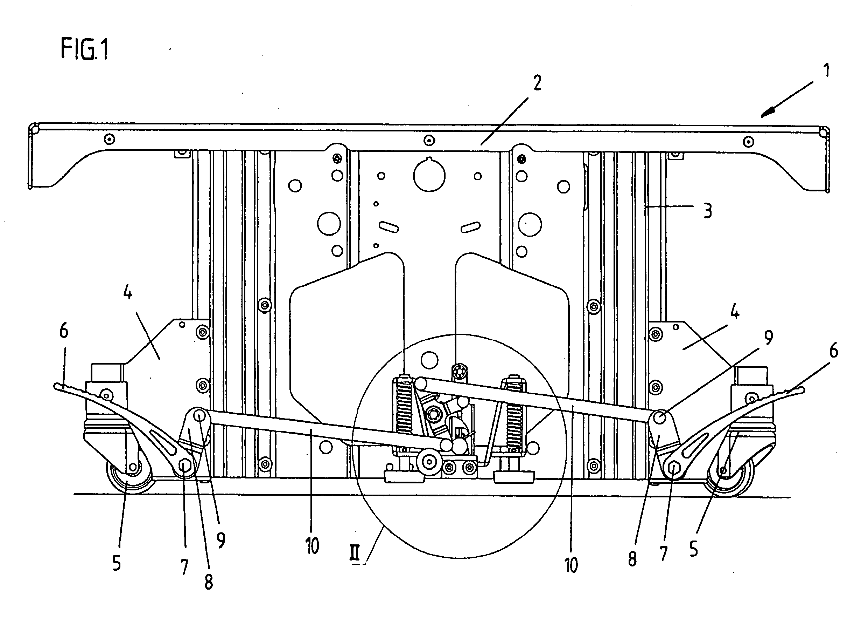

Das Untergestell und die Bremse eines erfindungsgemäßen Betts sind anhand der Zeichnung näher beschrieben. Darin zeigt
- Fig. 1: eine Frontansicht des Untergestells und der Bremse,
- Fig. 2: eine Einzelheit der Bremse gemäß II in Fig. 1,
- Fig. 3: die Einzelheit jedoch in einer zweiten Stellung der Bremse,
- Fig. 4: die Einzelheit jedoch in einer dritten Stellung der Bremse,

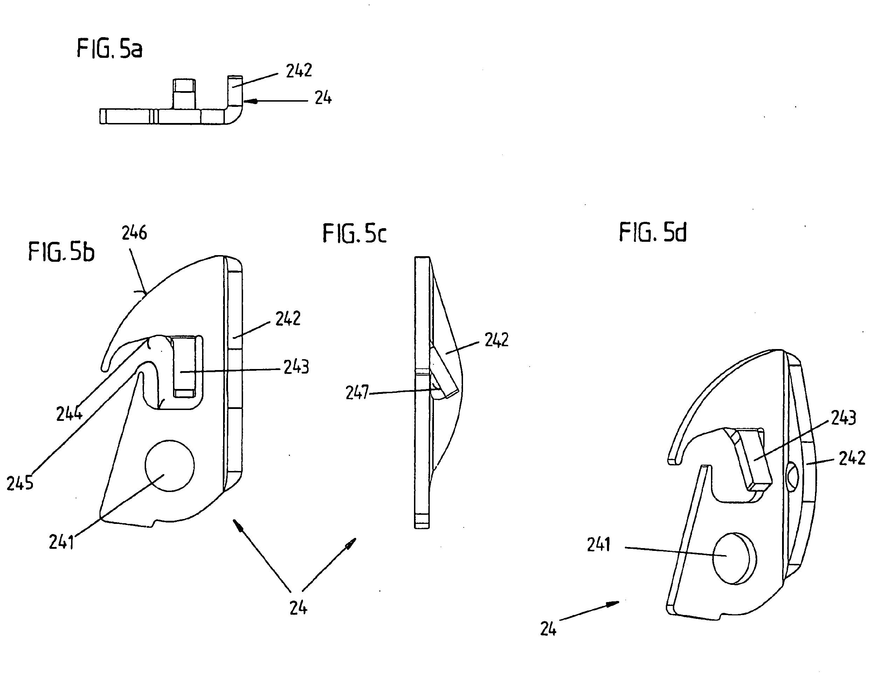

- Fig. 5a bis Fig. 5d: Ansichten einer Sperrklinke der Bremse,

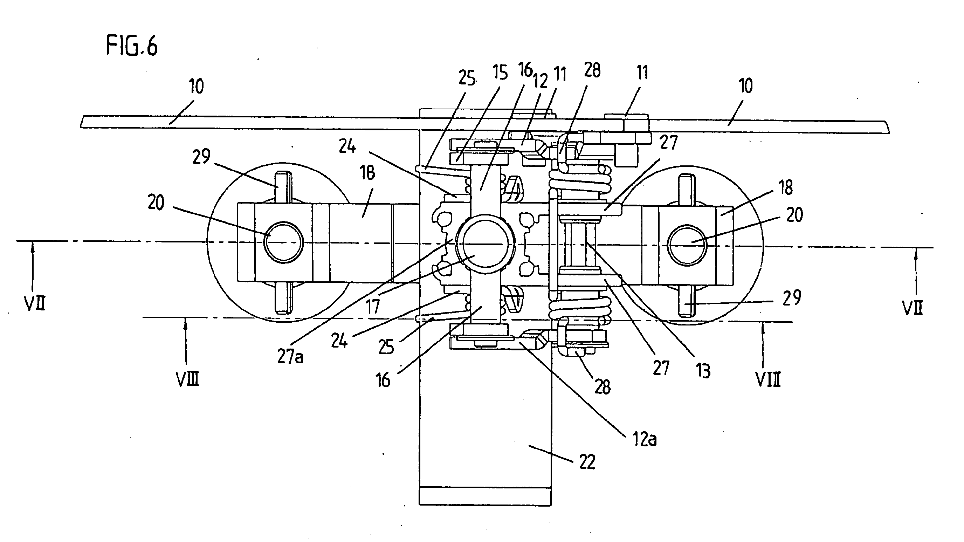

- Fig. 6: eine Draufsicht auf eine Einzelheit der Bremse,
- Fig. 7: einen Schnitt durch die Bremse gemäß der Linie VII-VII in Fig. 6 in vergrößerter Darstellung,
- Fig. 8: einen Schnitt entlang der Linie VIII-VIII in Fig. 6 in vergrößerter Darstellung in der ersten Stellung der Bremse,
- Fig. 9: einen Schnitt entsprechend Fig. 8 jedoch in der zweiten Stellung der Bremse,
- Fig. 10: einen Schnitt entsprechend der Fig. 8 und 9 jedoch in der dritten Stellung der Bremse und

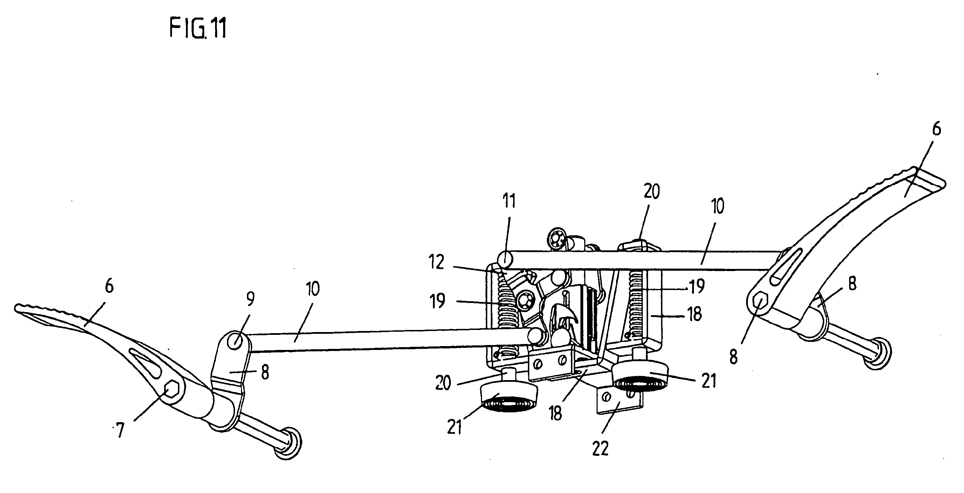

- Fig. 11: eine perspektivische Darstellung der Bremse.

Das Untergestell 1 des erfindungsgemäßen Betts weist einen oberen Holm 2 auf, an welchem ein Matratzenrahmen des erfindungsgemäßen Betts befestigt werden kann. Das erfindungsgemäße Bett weist zwei solcher Untergestelle auf. Ein Untergestell ist im Kopfbereich des Bettes vorgesehen, während das zweite Untergestell im Fußbereich des Bettes angeordnet ist. Der Holm 2 des Untergestells 1 liegt auf einem Stützteil 3 auf. Dieses Stützteil 3 nimmt alle Kräfte die auf das Bett wirken und die Gewichtskraft des Bettes auf und leitet diese Kräfte über Ausleger 4, die an dem Stützteil 3 befestigt sind, und Rollen 5, die an den Auslegern 4 auf bekannte Art und Weise befestigt sind, in die Aufstandsfläche des Bettes.

In einem ersten Zustand des Bettes kann das Bett ungebremst verschoben werden. Die Bremse des erfindungsgemäßen Bettes ist dann gelöst. In einem zweiten Zustand ist die Bremse des erfindungsgemäßen Bettes angezogen. Das Bett kann dann nur gegen die Wirkung der Bremse verschoben werden.

Die Bremse des erfindungsgemäßen Betts weist zwei an den Auslegern 4 des Untergestells schwenkbar gelagerte Betätigungshebel 6 auf. Die Betätigungshebel 6 sind auf je einer Achse 7 drehfest angebracht, die drehbar in den Auslegern 4 gelagert sind. Ebenfalls drehfest mit den Achsen 7 ist je ein erster Hebel 8 verbunden. Diese ersten Hebel 8 bilden zusammen mit jeweils einem zweiten Hebel 10 einen Kniehebel mit einem Schwenkpunkt an den Verbindungen 9 zwischen den ersten Hebeln und den zweiten Hebeln. Das Ende der zweiten Hebel 10 ist mit einem T-förmigen Hebelelement 12 verbunden. Die Verbindung zwischen den zweiten Hebeln 10 und dem T-förmigen Hebel 12 erfolgt dabei über Gelenke 11 an zwei gegenüberliegenden Armen des T-förmigen Hebels 12. Der Hebel 12 selbst ist drehfest an einer Achse 13 angebracht, die an einem Halteelement der Bremse angebracht. Das Halteelement 22, 27, 27a ist fest mit dem Stützteil 3 des Untergestells 1 verbunden.

Das Halteelement 22, 27, 27a besteht aus zwei parallel, beabstandet voneinander angeordneten Seitenblechen 27, die an einem Gehäuse 27a seitlich angebracht und an ihrer Unterseite über ein Steg 22 miteinander verbunden sind. Die Seitenbleche 27 weisen fluchtende kreisförmige Löcher auf, in denen die Achse 13 drehbar gelagert ist, wobei die Achse 13 mit ihren Enden beide Seitenbleche überragt. An dem einen Ende der Achse 13 ist der T-förmige Hebel 12 drehfest angebracht, während an dem anderen Ende ein dritter Hebel 12a drehfest angebracht ist.

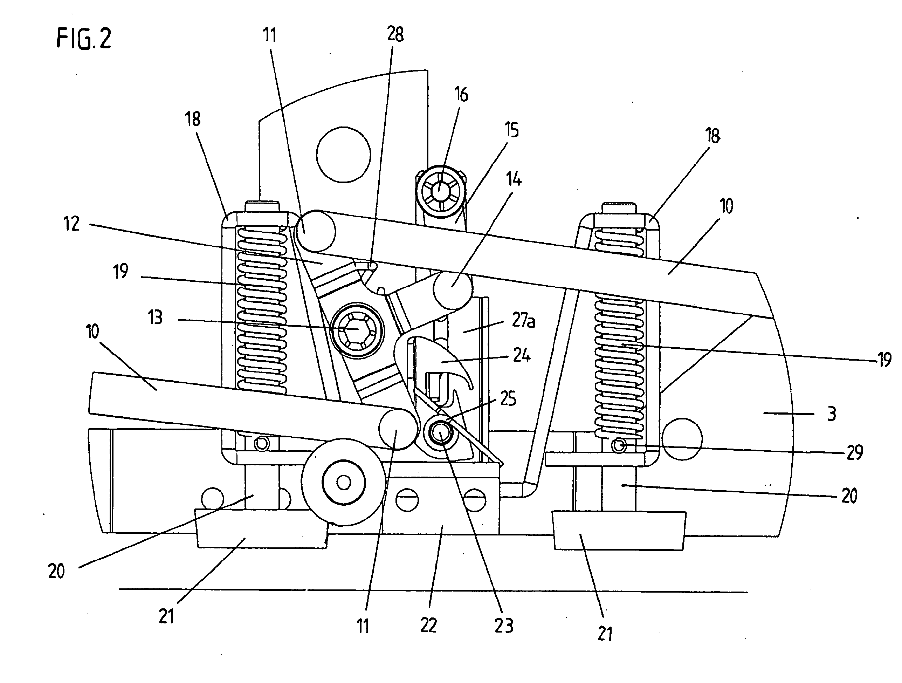

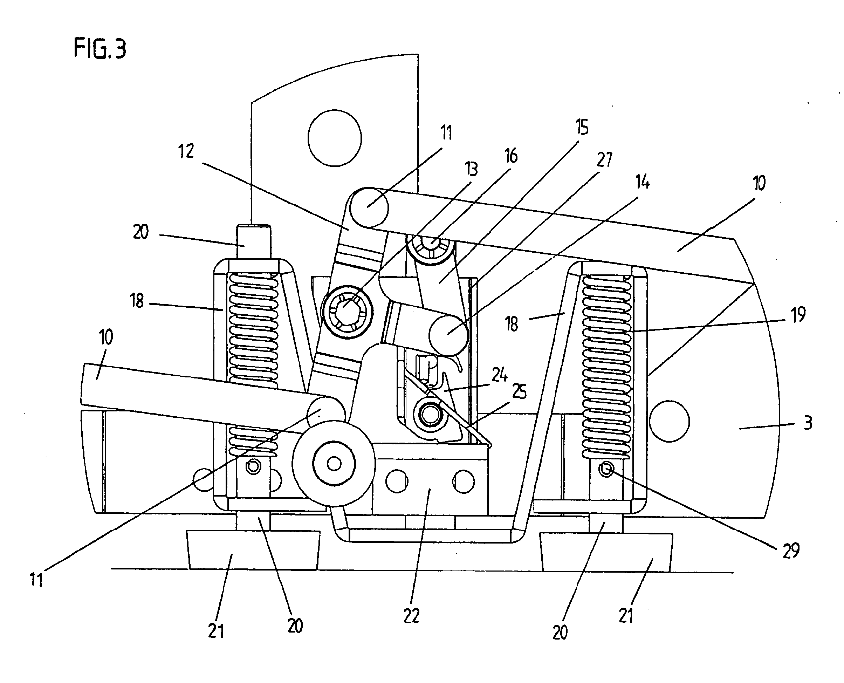

Eine Bewegung der Betätigungshebel 6 nach unten bewirkt, dass die zweiten Hebel 10 nach außen bewegt werden. Der T-förmige Hebel 12 beziehungsweise der dritte Hebel 12a wird dadurch in der Ansicht der Fig. 2 bis 4 im Uhrzeigersinn gedreht. Dabei bewegt sich das Ende eines dritten Arms des T-förmigen Hebels 12 und ein Ende des dritten Hebels 12a auf einer Kreisbahn um das Gelenk 13 nach unten. Das Ende des dritten Arms des T-förmigen Hebels 12 und das Ende des dritten Hebels 12a liegen dabei stets auf einer Höhe. An diesem Ende des dritten Arms und des dritten Hebels 12a ist je ein Gelenk 14 angebracht, welches den T-förmigen Hebel 12 beziehungsweise den dritten Hebel 12a mit je einem vierten Hebel 15 verbindet. Diese vierten Hebel 15 sind über eine Achse 16 mit einem Verschiebeelement 17, 18 der Bremse verbunden.

Die Bewegung des dritten Endes des T-förmigen Hebels 12 beziehungsweise des Hebels 12a nach unten bewirkt, dass das Verschiebeelement 17, 18 nach unten bewegt wird. Das Verschiebeelement 17, 18 ist an dem Halteelement 22, 27, 27a nach oben beziehungsweise unten verschiebbar gelagert.

In dem Steg 22 und dem Gehäuse 27a des Halteelements 22, 27, 27a ist eine kreisförmige Ausnehmung vorgesehen. In diesen kreisförmigen Ausnehmungen ist ein Bolzen 17 des Verschiebeelements 17, 18 gelagert. Das Gehäuse 27a weist sich von oben nach unten erstreckende Schlitze auf. Ein Stift 26 des Verschiebeelements 17, 18, der in einer Querbohrung des Bolzens 17 sitzt, durchgreift diese Schlitze des Halteelements 22, 27.

Auf der Außenseite des Gehäuses ist jeweils eine Sperrklinke 24 an einer Achse 23 angebracht, die drehbar in Bohrungen des Gehäuses 27a gelagert ist. Die Sperrklinke 24 wird dabei von einer Feder 25 mit einer Kraft beaufschlagt. Die Sperrklinke 24 wirkt mit dem Stift 26 des Verschiebeelements zusammen, was noch näher erläutert wird.

Das Verschiebeelement 17, 18 weist den Bolzen 17 auf, der mit seinem oberen Ende über die Achse 16 mit den vierten Hebeln 15 verbunden ist. Der Bolzen 17 ist durch die kreisförmige Ausnehmung in dem Steg 22 des Halteelements 22, 27 geführt und unterhalb des Stegs mit einem in etwa M-förmigen mehrfach abgewinkelten Bügel 18 verbunden. Der Bolzen 17 weist einen Schlitz auf, welchen die Achse 23, an der die Sperrklinken drehfest angebracht sind, durchgreift.

Die Bewegung der Betätigungshebel 6 wird über den T-förmigen Hebel und den fünften Hebel auf den Bolzen 17 des Verschiebeelements 17, 18 übertragen und bewirkt eine Bewegung des Bolzens und des damit verbundenen Bügels 18 nach oben beziehungsweise nach unten. Eine Feder 28, die zwischen dem T-förmigen Hebel 12 und dem dritten Hebel 12a einerseits und dem Halteelement 22, 27, 27a andererseits wirkt, drückt dabei den T-förmigen Hebel 12 und den dritten Hebel 12a und die damit im Weiteren verbundenen Elemente, so auch den Betätigungshebel 6 immer gegen den Uhrzeigersinn (Fig. 2 bis 4). Dieses entspricht einer oberen Stellung der Betätigungshebel 6. In dieser Stellung wird das Verschiebeelement 17, 18 nach oben gedrückt. Diese obere Stellung des Verschiebeelements und die obere Stellung des Betätigungshebels 6 entspricht einer ersten Stellung.

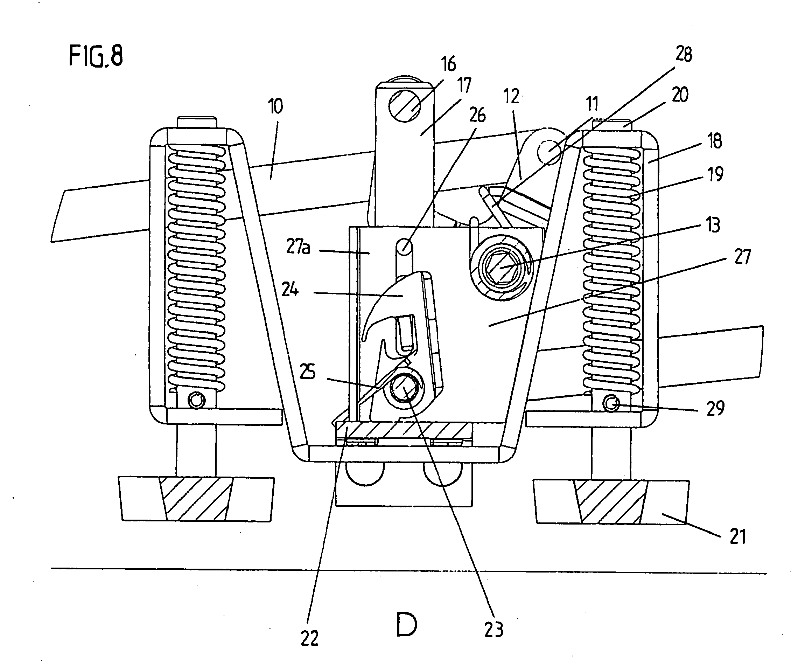

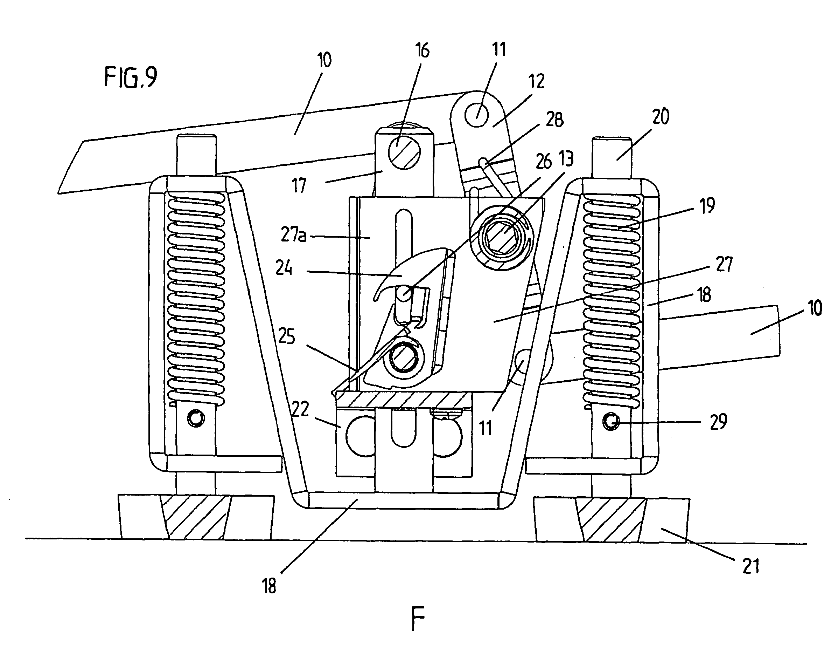

Mittels der Sperrklinke 24 und dem Stift 26 kann der Betätigungshebel und das Verschiebeelement 17, 18 jedoch in einer zweiten Stellung gehalten werden. Bei einer Betätigung des Betätigungshebels 6 in der ersten Stellung wie sie in der Fig. 2 dargestellt ist, wird das Verschiebeelement 17, 18 relativ zu dem Haltelement 22, 27 nach unten bewegt. Der Stift 26, der die Schlitze in dem Gehäuse 27a durchgreift, bewegt sich dabei nach unten bis er an einer Außenkontur 246 der Sperrklinken 24 anschlägt. Bei einer Weiterbewegung des Verschiebeelements 17, 18 mit dem Stift 26 nach unten dreht der Stift 26 die Sperrklinken 24 in der Darstellung der Fig. 2 bis 4 gegen den Uhrzeigersinn nach außen. Dieses entspricht einer Bewegung der Sperrklinken in der Darstellung der Fig. 8 bis 10 mit dem Uhrzeigersinn. Der Stift 26 gleitet entlang der Außenkonturen 246 bis das Ende dieser Außenkonturen 246 erreicht ist. Die Sperrklinken 24 werden dann aufgrund der Federkraft der Federn 25 gedreht und zwar in der Darstellung der Fig. 2 bis 3 im Uhrzeigersinn und in der Darstellung der Fig. 8 bis 10 gegen den Uhrzeigersinn. Wird nun der Betätigungshebel 6 der Bremse entlastet, bewegt sich der Betätigungshebel 6 und das Verschiebeelement 17, 18 aufgrund der Federkraft der Feder 28 nach oben. Der Stift 26 schlägt dann an der Innenkontur 244 der Sperrklinken an, wodurch eine weitere Bewegung des Verschiebelements 17, 18 nach oben begrenzt wird. Das Verschiebeelement 17, 18 und der Betätigungshebel 6 befinden sich nun in einer zweiten Stellung. Der Stift 26 liegt in dieser zweiten Stellung an den Innenkonturen 244 und einer schräg nach außen gebogenen Nase 243 der Sperrklinke 24 an.

Zum Lösen der Verriegelung durch die Sperrklinken 24 und zum Verbringen des Betätigungshebels 6 und des Verschiebeelementes 17, 18 zurück in die erste Stellung wird der Betätigungshebel 6 erneut nach unten bewegt. Das Verschiebeelement 17, 18 wird aufgrund der bereits erläuterten Kopplung über die verschiedenen Hebel gleichfalls nach unten gedrückt. Die Bewegung des Verschiebelements 17, 18 wird dabei dadurch gestoppt, dass der Stift 26 an je einer zweiten Innenkontur 245 der Sperrklinken 24 anschlägt. In dieser Position kommt der Stift 26 von den Nasen 243 frei und die Sperrklinken können aufgrund der Kraft der Federn 25 in der Darstellung der Fig. 2 bis 4 im Uhrzeigersinn und in der Darstellung der Fig. 8 bis 10 entgegen dem Uhrzeigersinn gedreht werden. Der Stift 26 kommt dabei unterhalb der Nasen 243 zum Liegen. Wird nun der Betätigungshebel 6 freigegeben, kann der Stift 26 auf den Innenseiten 247 der Nasen 243 entlang gleiten, wobei der Stift 26 ein Abheben der Sperrklinke 24 von den Seitenblechen 27 bewirkt. Der Stift 26 gleitet unterhalb der Sperrklinken 24 hindurch und die Sperrklinken 24 kommen von dem Stift 26 frei. Die Bewegung wird dann gestoppt, wenn die in der Fig. 2 beziehungsweise in der Fig. 8 dargstellte erste Stellung des Verschiebeelements 17, 18 und des Betätigungshebels 6 erreicht ist.

Mit dem Verschiebeelement 17, 18 sind zwei Andruckelemente 20, 21 verbunden. Diese Andruckelemente umfassen jeweils einen Bolzen 20, an dessen unterem Ende 21 ein Stempel vorgesehen ist. Ferner ist ein Stift 29 vorgesehen, der senkrecht zu dem Bolzen 17 in einer Bohrung des Bolzens 20 eingesetzt ist. Der Bolzen 20 ist durch zwei Bohrungen in Blechen 181, 182 hindurchgeführt, wobei die Bleche 181 und 182 über einen Steg 183 beabstandet und parallel zueinander angeordnet sind. Der Stempel 21 ist am unteren Ende des Bolzens 20 unterhalb des unteren Blechs 282 vorgesehen. Der Stift 29 ist dagegen innerhalb des Bereichs zwischen den Blechen 181, 282 angeordnet. Zwischen dem Stift 29 und dem oberen Blech 281 ist eine den Bolzen 20 umschließende Feder 19 vorgesehen. Diese Feder drückt den Stift 29 gegenüber dem Blech 181 nach unten. Insgesamt wird durch die Feder 19 daher das Andruckelement 20, 21 gegenüber dem Verschiebelement 17, 18 nach unten gedrückt.

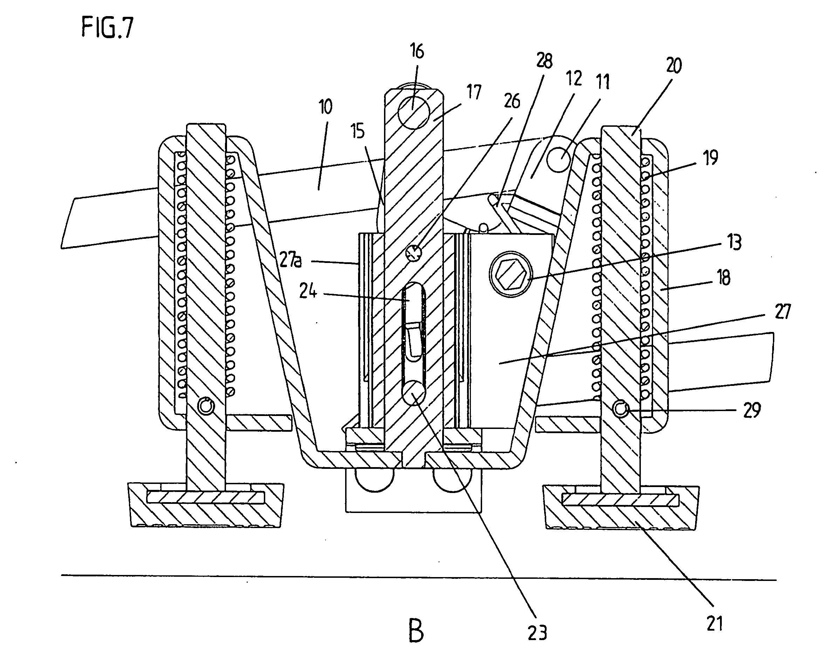

In der ersten Stellung des Verschiebeelements 17, 18 wie sie in der Fig. 2 und in der Fig. 7 und der Fig. 8 dargestellt ist, drückt die Feder das Andruckelement 20, 21 so weit nach unten, bis der Stift 29 am unteren Blech 182 anschlägt. Wird dagegen das Verschiebeelement in die zweite Stellung gebracht, beziehungsweise legen sich die Andruckelemente 20, 21 zunächst synchron zu den Verschiebeelementen zu dem Verschiebeelement 17, 18 nach unten. Schlagen nun die Stempel 21 auf der Aufstandfläche des Bettes an und wird das Verschiebeelement 17, 18 weiter nach unten bewegt bis es die zweite Stellung erreicht, hebt sich der Stift 29 von der Innenseite des Bleches 182 ab und die Feder 19 wird zusammengedrückt. In dieser Stellung ist dann der zweite Zustand des Bettes erreicht, in dem die Bremse angezogen ist. Zwar haben die Rollen 5 des Bettes noch Kontakt zu der Aufstandsfläche, ein Fortrollen des Bettes ist jedoch durch den Druck verhindert, den die Stempel 21 aufgrund der Federkraft der Feder 19 auf die Aufstandsfläche ausüben.

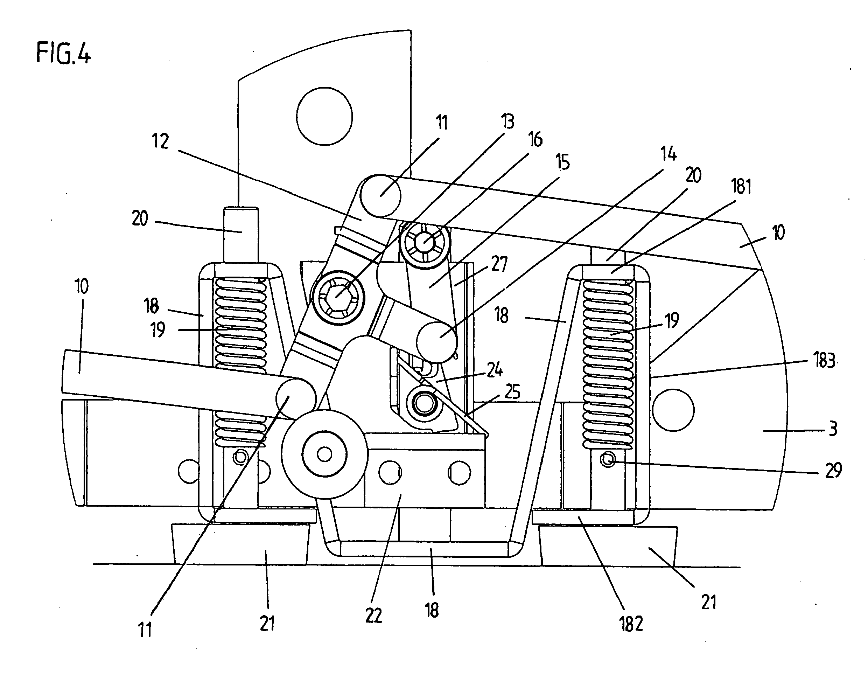

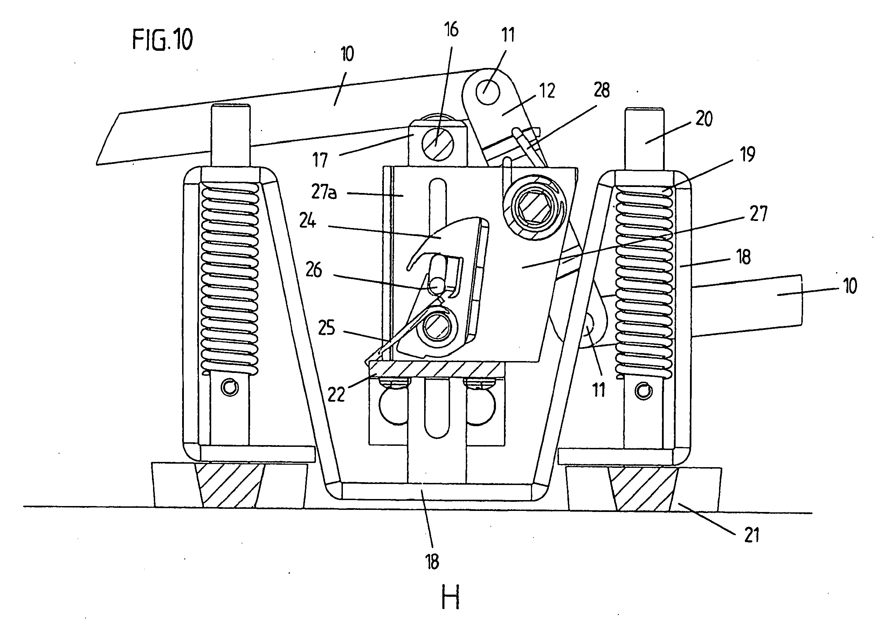

Zum Lösen der Bremse wird das Verschiebeelement 17, 18 - wie bereits ausgeführt - in die dritte Stellung gebracht. Dazu wird, wie auch aus den Fig. 4 und 10 erkennbar ist, die Feder 19 zunächst weiter gestaucht. Da die dritte Stellung jedoch nicht dauerhaft eingenommen wird, d. h., da die verschiedenen Elemente der Bremse in der dritten Stellung nicht zueinander verriegelt werden, ist diese dritte Stellung nicht von Dauer. Mit der dritten Stellung gelangt man vielmehr immer, nachdem keine äußeren Kräfte mehr auf die Betätigungshebel 6 einwirken, zurück in die erste Stellung.

## Patentansprüche

1. Bett, insbesondere ein Kranken- oder Pflegebett mit Rollen (5) und zumindest einer Bremse, wobei das Bett in einem ersten Zustand ungebremst verfahrbar und in einem zweiten Zustand gebremst ist, wobei die Bremse zumindest einen Betätigungshebel (6) aufweist und wobei der Betätigungshebel (6) zum Feststellen der Bremse, d. h. beim Wechsel vom ersten Zustand in den zweiten Zustand, und zum Lösen der Bremse, d. h. beim Wechsel vom zweiten Zustand in den ersten Zustand, in die gleiche Richtung verschwenkbar ist,
**dadurch gekennzeichnet,**
**dass** die Bremse zumindest ein Andruckelement (20, 21) und zumindest ein Federelement (19) aufweist, wobei im zweiten Zustand zum Bremsen des Bettes das Federelement (19) gespannt ist und das Andruckelement (20, 21) gegen eine Aufstandsfläche drückt, auf der das Bett mit seinen Rollen (5) ruht, dass die Bremse ein Verschiebelement (17, 18) umfasst, an welchem das Andruckelement (20, 21) verschiebbar gelagert ist, dass das Verschiebeelement (17, 18) über Hebel (8, 10, 12, 15) mit dem Betätigungshebel (6) zur Übertragung von auf den Betätigungshebel (6) wirkenden Kräften gekoppelt ist, dass das Verschiebeelement (17, 18) entsprechend der Stellungen des Betätigungshebels (6) in eine erste Stellung, eine zweite Stellung und eine dritte Stellung bringbar ist und dass das Bett zumindest eine Sperrklinke (24) umfasst, welche das Verschiebeelement (17, 18) in der ersten Stellung und der zweiten Stellung verriegelt.

2. Bett nach Anspruch 1, **dadurch gekennzeichnet, dass** der Betätigungshebel (6) im ersten Zustand des Bettes eine erste Stellung und im zweiten Zustand des Bettes eine zweite Stellung hat und dass der Betätigungshebel (6) zum Wechsel vom zweiten Zustand in den ersten Zustand in eine dritte Stellung verschwenkbar ist.

3. Bett nach Anspruch 2, **dadurch gekennzeichnet, dass** die zweite Stellung des Betätigungshebels (6) zwischen der ersten Stellung und der dritten Stellung ist.

4. Bett nach einem der Ansprüche 1 oder 3, **dadurch gekennzeichnet, dass** im ersten Zustand das Federelement (19) entspannt ist und das Andruckelement (20, 21) von der Aufstandsfläche abgehoben hält.

5. Bett nach einem der Ansprüche 1 bis 4, **dadurch gekennzeichnet, dass** das Federelement (19) zwischen dem Verschiebeelement (17, 18) und dem Andruckelement (20, 21) angeordnet ist.

6. Bett nach einem der Ansprüche 1 bis 5, **dadurch gekennzeichnet, dass** das Verschiebeelement (17, 18) verschiebbar an dem Untergestell (3) angebracht ist.

7. Bett nach einem der Ansprüche 1 bis 6, **dadurch gekennzeichnet, dass** das Verschiebeelement (17, 18) verschiebbar an einem Halteelement (22, 27) angebracht ist.

8. Bett nach Anspruch 7, **dadurch gekennzeichnet, dass** das Halteelement (22, 27) an dem Untergestell angebracht ist.

## Claims

1. Bed, in particular a hospital bed having casters (5) and at least one brake, it being the case that the bed, in a first state, can be displaced without braking and, in a second state, is braked, that the brake has at least one actuating lever (6), and that the actuating lever (6) can be pivoted in the same direction in order to arrest the brake, i.e. upon the changeover from the first state into the second state, and to release the brake, i.e. upon changeover from the second state into the first state,
**characterized in**
**that** the brake has at least one pressure-exerting element (20, 21) and at least one spring element (19), it being the case that, in the second state, for braking the bed, the spring element (19) is subjected to stressing and the pressure-exerting element (20, 21) pushes against a standing surface on which the bed is resting by way of its casters (5), in that the brake comprises a displacement element (17, 18), on which the pressure-exerting element (20, 21) is mounted in a displaceable manner, in that the displacement element (17, 18) is coupled, via levers (8, 10, 12, 15), to the actuating lever (6) for transmission of forces acting on the actuating lever (6), in that the displacement element (17, 18), corresponding to the positions of the actuating lever (6), can be moved into a first position, a second position and a third position, and in that the bed comprises at least one pawl (24) which locks the displacement element (17, 18) in the first position and the second position.

2. Bed according to Claim 1, **characterized in that** the actuating lever (6), in the first state of the bed, is in a first position and, in the second state of the bed, is in a second position, and **in that** the actuating lever (6), for changeover from the second state into the first state, can be pivoted into a third position.

3. Bed according to Claim 2, **characterized in that** the second position of the actuating lever (6) is between the first position and the third position.

4. Bed according to either of Claims 1 and 3, **characterized in that,** in the first state, the spring element (19) is relieved of stressing and keeps the pressure-exerting element (20, 21) raised up from the standing surface.

5. Bed according to one of Claims 1 to 4, **characterized in that** the spring element (19) is arranged between the displacement element (17, 18) and the pressure-exerting element (20, 21).

6. Bed according to one of Claims 1 to 5, **characterized in that** the displacement element (17, 18) is fitted in a displaceable manner on the substructure (3).

7. Bed according to one of Claims 1 to 6, **characterized in that** the displacement element (17, 18) is fitted in a displaceable manner on a retaining element (22, 27).

8. Bed according to Claim 7, **characterized in that** the retaining element (22, 27) is fitted on the substructure.

## Revendications

1. Lit, notamment lit de malade ou de soins doté de roulettes (5) et d'au moins un frein, le lit pouvant être déplacé sans freinage dans un premier état et avec freinage dans un deuxième état, le frein comportant au moins un levier d'actionnement (6) et le levier d'actionnement (6) pouvant être pivoté dans la même direction de façon à bloquer le frein, c'est-à-dire de façon à passer du premier état au deuxième état, et de façon à desserrer le frein, c'est-à-dire de façon à passer du deuxième état au premier état,
**caractérisé en**
**ce que** le frein comporte au moins un élément de pression (20, 21) et au moins un élément de ressort (19), l'élément de ressort (19) étant serré dans le deuxième état destiné à freiner le lit et l'élément de pression (20, 21) appuyant contre une surface de contact au sol sur laquelle le lit repose avec ses roulettes (5), **en ce que** le frein comprend un élément mobile (17, 18) contre lequel l'élément de pression (20, 21) peut être disposé de façon mobile, que l'élément mobile (17, 18) est couplé au levier d'actionnement (6) via les leviers (8, 10, 12, 15) pour transmettre les forces s'exerçant sur le levier d'actionnement (6), que l'élément mobile (17, 18) peut être amené dans une première position, une deuxième position et une troisième position en fonction des positions du levier d'actionnement (6) et que le lit comprend au moins un cliquet d'arrêt (24) verrouillant l'élément mobile (17, 18) dans la première position et dans la deuxième position.

2. Lit selon la revendication 1, **caractérisé en ce que** le levier d'actionnement (6) a une première position dans le premier état du lit et une deuxième position dans le deuxième état du lit et que le levier d'actionnement (6) peut être positionné dans une troisième position pour passer du deuxième état au premier état.

3. Lit selon la revendication 2, **caractérisé en ce que** la deuxième position du levier d'actionnement (6) est située entre la première position et la troisième position.

4. Lit selon l'une quelconque des revendications 1 ou 3, **caractérisé en ce que** l'élément de ressort (19) est détendu dans le premier état et que l'élément de pression (20, 21) est maintenu décollé de la surface de contact au sol.

5. Lit selon l'une quelconque des revendications 1 à 4, **caractérisé en ce que** l'élément de ressort (19) est disposé entre l'élément mobile (17, 18) et l'élément de pression (20, 21).

6. Lit selon l'une quelconque des revendications 1 à 5, **caractérisé en ce que** l'élément mobile (17, 18) est disposé de façon mobile contre le bâti (3).

7. Lit selon l'une quelconque des revendications 1 à 6, **caractérisé en ce que** l'élément mobile (17, 18) est disposé de façon mobile contre un élément d'arrêt (22, 27).

8. Lit selon la revendication 7, **caractérisé en ce que** l'élément d'arrêt (22, 27) est placé contre le bâti.
